# FASCICULE DE BREVET EUROPEEN

(11) **EP 3 292 026 B1**
(45) Date de publication et mention de la délivrance du brevet: **09.06.2021**
(21) Numéro de dépôt: 16722327.0
(22) Date de dépôt: 29.04.2016
(51) Int. Cl.: B60R 11/04, B60R 9/02, B60S 1/08, B60R 11/00, B60R 11/02

(54) **VITRAGE DE VEHICULE COMPRENANT UNE PLATINE POUR LA FIXATION DE PLUSIEURS ACCESSOIRES, PLATINE ET PROCEDE DE FIXATION**
FAHRZEUGSCHEIBE MIT EINER PLATTE ZUR BEFESTIGUNG MEHRERER GERÄTE, PLATTE UND BEFESTIGUNGSMETHODE
VEHICLE GLASS COMPRISING A PLATE FOR FIXING MORE ACCESSORIES, PLATE AND METHOD OF FIXING

(30) Priorité: 07.05.2015 FR 1554095
(43) Date de publication de la demande: 14.03.2018
(73) Titulaire: SAINT-GOBAIN GLASS FRANCE, 92400 Courbevoie (FR)
(72) Inventeur: SILVESTRINI, Laurent, 60400 Bussy (FR); BREBION, Raymond, 62280 Saint Martin Boulogne (FR)
(74) Mandataire: Saint-Gobain Recherche
(86) Numéro de dépôt international: PCT/FR2016/051015
(87) Numéro de publication internationale: WO 2016/177955

(56) Documents cités:
- EP-A1- 2 705 986
- DE-A1- 10 211 444
- DE-A1-102012 021 571
- DE-A1-102012 024 274

## Description

La présente invention concerne la fixation d'accessoires à des vitrages de véhicule et plus particulièrement des vitrages de véhicules automobiles.

Une platine et/ou une embase et/ou une semelle, est (ou sont) fixée(s) habituellement chacune contre la face intérieure d'un élément vitré d'un vitrage de véhicule, afin de permettre d'attacher mécaniquement un (ou plusieurs) accessoire(s) à cette face intérieure par l'intermédiaire respectivement de la platine, de l'embase et de la semelle.

Les accessoires peuvent être par exemple un capteur de pluie et/ou de luminosité, ou encore un détecteur ou une caméra ou un écran de visualisation.

Le positionnement précis et la fixation précise de la platine, de l'embase et de la semelle contre la face intérieure de l'élément vitré permet alors un positionnement et une attache précise de l'accessoire contre, ou quasiment contre, cette face intérieure.

La platine, l'embase ou la semelle doivent chacune être positionnée et fixée avec précision car un trou est également ménagée dans la bande d'émail ou analogue située en périphérie du vitrage, pour être en vis-à-vis d'un trou ménagé dans la platine, l'embase ou la semelle et permettre le fonctionnement de l'accessoire sans que la bande d'émail ou analogue ne gêne.

Cette opération de collage est réalisée dans un atelier particulier, en reprise, lorsque que le vitrage est quasiment terminé, avant sa livraison pour positionnement et fixation dans la baie de la carrosserie qu'il doit fermer.

Cette opération est longue lorsqu'une colle polymérisable est utilisée car la polymérisation prend du temps et le vitrage ne peut être bougé pendant ce temps pour ne pas risquer de modifier la position de la platine, l'embase ou la semelle. Une période de 4 jours d'attente est généralement observée avant que le vitrage ne soit saisi.

Cette opération peut être opérée plus rapidement en utilisant du ruban adhésif double face, mais cette fixation est moins précise et moins fiable.

Cette opération de fixation de la platine, l'embase ou la semelle est fastidieuse car chacune possède son propre référentiel.

La précision du positionnement de chaque élément par rapport aux autres est dispersive.

L'art antérieur connaît de la demande de brevet DE 10 2012 024 274 un vitrage comportant une platine pour la fixation d'un rétroviseur intérieur à laquelle peut être attachée mécaniquement une embase pour la fixation d'un dispositif électronique. La platine et l'embase sont ainsi deux pièces différentes et les moyens pour attacher réversiblement l'une à l'autre obligent à référencer chaque élément séparément lors de leur fixation à l'élément vitré.

L'art antérieur connaît de la demande de brevet EP 2 705 986 un vitrage comportant une platine qui comporte elle-même une embase. La pièce unique ainsi visible dans ce document ne permet pas de référencer différemment les moyens qui permettent de fixer les deux accessoires.

Le document DE 102 11 444 divulgue un vitrage conforme au préambule de la revendication 1 et une pièce de fixation conforme au préambule de la revendication 12.

La présente invention a pour but de remédier aux inconvénients de la technique antérieure en proposant un mode particulier d'assemblage d'une platine avec une embase et de fixation de cet ensemble à un élément vitré, voire un mode particulier d'assemblage de cette platine avec en outre une semelle et la fixation de cet ensemble à un élément vitré, afin que la fixation de ces moyens intermédiaires qui permettent eux-mêmes d'attacher réversiblement des accessoires soit à la fois plus rapide et très sûre.

Par ailleurs, la présente invention entend proposer un procédé plus facile à mettre en œuvre et plus fiable de fixation d'une platine et d'une embase à l'élément vitré, voire d'une platine, d'une embase et d'une semelle à l'élément vitré.

En outre, la présente invention entend proposer une solution permettant de minimiser les tolérances de positionnement entre composants (platine, embase, semelle) aux tolérances de conception et fabrication de la platine en elle-même.

La présente invention repose ainsi sur une solution utilisant au moins une liaison mécanique entre les composants, c'est-à-dire une liaison mécanique entre une platine et une embase, voire entre cette platine et en outre une semelle.

Il s'agit ainsi de prévoir une pièce unique pour laquelle un moyen qui permet d'attacher un accessoire (par exemple une embase ou une semelle) peut être orienté différemment d'un autre moyen (par exemple une platine) qui permet d'attacher un autre accessoire.

La présente invention se rapporte à un vitrage selon la revendication 1, à une pièce de fixation selon la revendication 12 et les revendications dépendantes définissent des solutions avantageuses.

Ainsi suivant l'invention, un vitrage de véhicule comporte un élément vitré et au moins une platine pour l'attachement réversible d'un accessoire (premier accessoire) audit élément vitré, ladite platine présentant une face extérieure qui est fixée en vis-à-vis d'une face intérieure dudit élément vitré.

Ce vitrage est remarquable en ce qu'il comporte au moins une embase pour l'attachement réversible d'un autre accessoire (second accessoire) audit élément vitré, ladite embase étant liée mécaniquement par au moins un bras de liaison liant ladite embase à ladite platine et ladite embase présentant une face extérieure qui est fixée en vis-à-vis d'une face intérieure dudit élément vitré.

Avant la fixation, par exemple par collage, de la platine à la face intérieure de l'élément vitré, la liaison mécanique entre l'embase et la platine est uniquement par ledit bras ou lesdits bras s'il y en a plusieurs.

La platine est donc différente d'une pièce telle que connue dans l'art antérieur, monobloc ou en plusieurs parties, qui permettait la fixation de plusieurs accessoires mais qui ne permettait pas de modifier la position d'un support d'accessoire par rapport à l'autre support d'accessoire avant la fixation définitive à l'élément vitré.

L'embase est, de préférence, séparée de la platine par une fente et cette fente est traversée ou enjambée par le ou les bras de liaison ; cette fente n'est enjambée que par ce ou ces bras de liaison.

Ladite platine présente un plan général (qui suit de préférence la courbure générale de l'élément vitré à cet endroit) ; ledit bras de liaison, ou lesdits bras de liaison ne sont de préférence pas dans ce plan général de la platine mais s'écarte(nt) de ce plan vers l'intérieur.

Ce bras de liaison, ou ces bras de liaison, permet(tent) de modifier l'orientation de l'embase vis-à-vis de la platine lors de l'attachement de l'embase à la face intérieure de l'élément vitré. Cette possibilité de modifier est guidée, tant en profondeur que latéralement et longitudinalement (c'est-à-dire dans les trois directions de l'espace) par le bras de liaison ou les bras de liaison ; Ce guidage constitue aussi une limite ou un bridage dans les possibilités de modifier l'orientation de l'embase.

Dans tous les cas, l'embase est liée à la platine au moins jusqu'à la fixation définitive de l'embase à l'élément vitré de telle sorte qu'il n'y a qu'une seule pièce principale à manipuler.

Le vitrage selon l'invention comporte ainsi une pièce principale monobloc qui est constituée de tous les supports d'accessoires :
- la platine et l'embase selon l'invention,
- ou la platine, l'embase et un autre support d'accessoire tel qu'une semelle, ...

Dans l'absolu il pourrait être envisagé qu'un bras de liaison, le bras de liaison, certains bras de liaison voire tous les bras de liaison soi(en)t sécable(s) et soi(en)t parfois, voire à chaque fois, rompu(s) lors de la fixation de l'embase à l'élément vitré.

De préférence, ladite embase n'est liée mécaniquement à ladite platine que par ledit (ou lesdits) bras de liaison.

Par « attache » ou « attachement » au sens de la présente invention, il faut comprendre les attaches mécaniques, qui s'attachent et se détachent manuellement ou à l'aide d'un outil mécanique. Ce qui est attaché est ainsi dans une position fixe.

Par « fixation » au sens de la présente invention, il faut comprendre les fixations chimiques, qui engendrent des modifications moléculaires irréversibles, sauf à rompre la liaison et à rendre la platine inutilisable.

Par « liaison » ou « lié » au sens de la présente invention, il faut comprendre qu'un élément mécanique réalise un lien entre deux autres et que ce lien est permanent au moins jusqu'à la fixation à l'élément vitré, mais que ce qui est ainsi lié peut bouger par rapport à quoi il est lié, sauf si une fixation s'oppose à ce mouvement. Ce lien appartient ainsi aux deux éléments liés.

Chacune de ces trois expressions exclut les deux autres.

Dans une version particulière de l'invention, le vitrage comporte en outre au moins une semelle pour l'attachement réversible d'un autre accessoire (troisième accessoire) audit élément vitré, ladite semelle étant liée mécaniquement par au moins un bras de liaison liant ladite semelle à ladite platine et ladite semelle présentant une face extérieure qui est fixée en vis-à-vis d'une face intérieure dudit élément vitré.

La semelle est, de préférence, séparée de la platine par une fente qui est traversée par le ou les bras de liaison ; cette fente n'est enjambée que par ce ou ces bras de liaison.

La fente (ou les fentes) qui sépare(nt) l'embase et la platine, voire la semelle et la platine, peut (ou peuvent) être située tout autour respectivement de la semelle ou de l'embase sauf si cette la-semelle ou cette embase est située le long d'un bord latéral de la platine ; chaque bras de liaison enjambe respectivement ladite fente.

Le bras de liaison, ou les bras de liaison, qui lie(nt) la semelle à la platine est (ou sont) similaire(s) respectivement au(x) bras de liaison qui lie(nt) la l'embase à la platine : ils peuvent présenter des formes (longueur, épaisseur) différentes mais ils assurent la même fonction : permettre de modifier l'orientation par rapport à la platine du support d'accessoire (semelle, embase, ...) lié à cette platine par ce(s) bras de liaison et cela avant ou pendant la fixation de ce support d'accessoire à l'élément vitré. La semelle et l'embase peuvent être différentes dans leur forme ; elles permettent, chacune, d'attacher réversiblement un accessoire audit élément vitré.

De préférence, ladite semelle et/ou ladite embase est (ou sont) liée(s) mécaniquement à ladite platine par plusieurs bras de liaison disposés de préférence symétriquement les uns par rapport aux autres et par rapport à un axe passant par un centre respectivement de ladite semelle et/ou de ladite embase ou par rapport à un plan passant par un centre respectivement de ladite semelle ou de ladite embase.

Cette disposition symétrique permet en particulier une meilleure répartition des efforts passant par lesdits bras de liaison lors de l'ajustement de la position de l'embase ou de la semelle par rapport à la platine.

Par exemple ladite semelle et/ou ladite embase est (ou sont) liée(s) mécaniquement à ladite platine par trois bras de liaison disposés à 120 ° les uns des autres par rapport à un centre de ladite semelle, respectivement de ladite embase, ou par quatre bras de liaison disposés symétriquement deux à deux par rapport à un plan de symétrie passant par un centre de ladite semelle, respectivement de ladite embase (par exemple à 90 ° les uns des autres par rapport à un centre de ladite semelle, respectivement de ladite embase).

De préférence, ladite platine, ladite semelle et/ou ladite embase sont fixées à ladite face intérieure dudit élément vitré par deux, voire trois matières adhésives identiques.

De préférence, ladite semelle n'est liée mécaniquement à ladite platine que par ledit (ou lesdits) bras de liaison.

De préférence par ailleurs, ledit bras de liaison ou chaque bras de liaison est venu de matière d'une part avec ladite platine et d'autre part respectivement avec ladite semelle ou ladite embase, ledit bras de liaison ou chaque bras de liaison présentant de préférence :
- une largeur mesurée transversalement à ladite fente, comprise entre 0,5 et 3,0 mm et/ou
- une épaisseur comprise entre 0,5 et 3,0 mm.

Dans une variante, ledit bras de liaison ou chaque bras de liaison est coudé, afin de permettre une liaison plus souple. Ce coude est, de préférence, orienté vers l'intérieur.

Il est possible par ailleurs que ladite platine comporte des éléments pour l'attachement réversible d'un cache intérieur.

Le vitrage selon l'invention peut comprendre les accessoires qui sont attachés grâce à la platine, à l'embase, à la semelle, ...

Lesdits accessoires sont, de préférence, choisis dans une liste comprenant : un capteur de pluie, un capteur de luminosité, un capteur photographique (appareil de captation d'image fixe dans le domaine du visible ; analogique ou numérique), un capteur infrarouge, une caméra (appareil de captation d'image animée dans le domaine du visible ; analogique ou numérique), un support de rétroviseur, un support d'écran de visualisation.

De préférence, ledit élément vitré est un élément vitré feuilleté bombé.

La présente invention concerne par ailleurs une pièce pour la fixation d'un accessoire au vitrage selon l'invention, ladite pièce comportant au moins une platine et une embase pour la fixation d'un autre accessoire, ladite embase étant liée mécaniquement par au moins un bras de liaison à ladite platine.

La présente invention concerne par ailleurs un procédé pour la fixation de plusieurs accessoires au vitrage selon l'invention, ladite platine étant fixée à ladite face intérieure dudit élément vitré puis l'embase étant fixée à ladite face intérieure dudit élément vitré en ajustant la position de ladite embase par rapport à ladite platine, cet ajustement étant bridé (ou contrôlé) par au moins un bras de liaison.

La présente invention permet ainsi, grâce au(x) bras de liaison de réaliser une liaison ajustée avec précision entre l'élément vitré et les deux accessoires qui sont attachés à cet élément vitré par l'intermédiaire de la platine et de l'embase, voire les trois accessoires qui sont attachés à cet élément vitré par l'intermédiaire de la platine, de l'embase et de la semelle. Cet ajustement précis est de préférence opéré lors de la fixation à l'élément vitré de la platine, de l'embase, voire de la semelle.

Ainsi, pour un vitrage et d'un vitrage à un autre d'une même série, d'une part l'attachement de chaque accessoire est sûr et certain, mais en outre, il est fiable car optimisé par rapport à la configuration exacte du vitrage. Ceci est particulièrement important pour les vitrages feuilletés et bombés pour lesquels il peut exister une certaine dispersion dans les dimensions à l'intérieur même d'une série.

La présente invention permet l'intégration de plusieurs fonctions (les fonctions des accessoires) sur une pièce unique, tout en permettant le référentiel de chaque fonction lors de la fixation à l'élément vitré ; elle permet aussi la réduction des dispersions géométriques entre les fonctions et de réduire les coûts de gestion et d'achats.

Plusieurs formes d'exécution sont décrites ci-après, à titre d'exemple non limitatif, en référence aux dessins annexés sur lequel :
- la figure 1 est une vue en perspective d'une platine de l'art antérieur pour l'attachement d'un accessoire à un élément vitré montrant principalement la face extérieure de cette platine, ainsi qu'une embase et une semelle qui sont toutes les deux complètement distinctes de cette platine pour l'attachement respectivement de deux autres accessoires ;
- la figure 2 est une vue en perspective d'une platine selon l'invention pour l'attachement d'un accessoire à un élément vitré montrant principalement la face extérieure de cette platine, cette platine comportant une embase liée à cette platine, pour l'attachement d'un autre accessoire ;
- la figure 3 est une vue en coupe selon AA' de la figure 2 faisant en outre apparaître partiellement en coupe un élément vitré et de la matière adhésive fixant d'une part la platine et d'autre part l'embase à la face intérieure de l'élément vitré ;
- la figure 4 est une vue partielle en perspective de la figure 2 illustrant l'embase et montrant principalement la face intérieure de cette embase ;
- la figure 5 est une vue de détail en perspective de la figure 2 illustrant un bras de liaison réalisant un lien mécanique entre l'embase et la platine ;
- la figure 6 est une vue en perspective d'une autre platine selon l'invention pour l'attachement d'un accessoire à un élément vitré montrant principalement la face intérieure de cette platine, une embase étant liée à cette platine pour l'attachement d'un autre accessoire ; et
- la figure 7 est une vue en perspective d'une autre platine selon l'invention pour l'attachement d'un accessoire à un élément vitré montrant principalement la face intérieure de cette platine, une embase et une semelle étant chacune liée à cette platine, pour l'attachement de deux autres accessoires.

Dans ces figures, les proportions entre les différents éléments sont respectées sur chaque figure mais les éléments en arrière-plan ne sont en général pas représentés, afin de faciliter leur lecture.

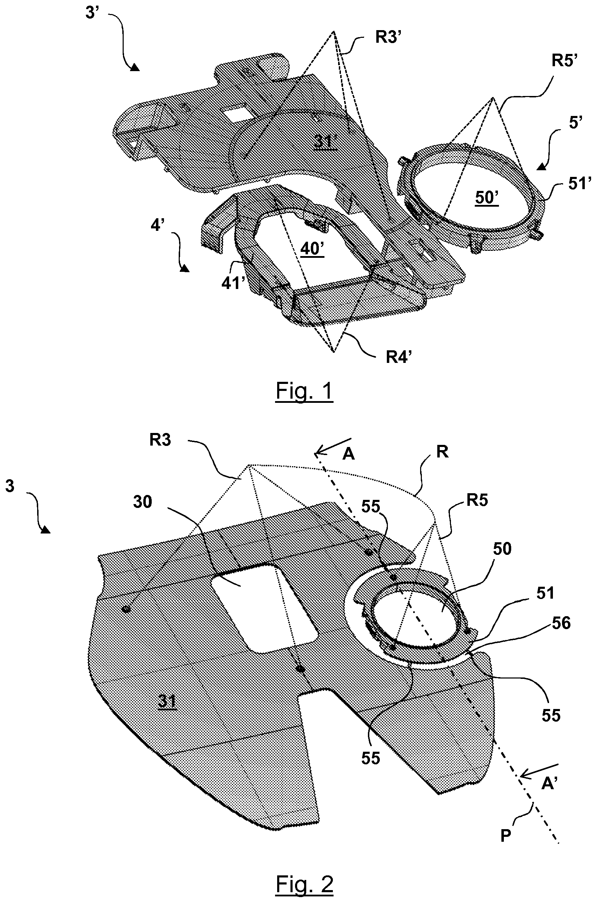

La figure 1 illustre trois moyens d'attachement réversible d'accessoires de l'art antérieur. Ces moyens sont fixés contre la face intérieure d'un élément vitré (non illustré sur cette figure), afin que chacun permette l'attachement d'un accessoire.

Ces trois moyens sont, ici, respectivement :
- une platine 3' pour l'attachement réversible d'un accessoire, comme par exemple un rétroviseur intérieur, audit élément vitré, ladite platine 3' présentant une face extérieure 31' qui est destinée à être fixée à une face intérieure d'un élément vitré, en vis-à-vis de cette face intérieure de l'élément vitré ;
- une semelle 4' pour l'attachement réversible d'un autre accessoire, comme par exemple une caméra, audit élément vitré, la semelle 4' présentant un trou 40' pour le passage d'une partie de cet accessoire et une face extérieure 41' qui est destinée à être fixée à une face intérieure de l'élément vitré, en vis-à-vis de cette face intérieure de l'élément vitré ; et
- une embase 5' pour l'attachement réversible d'un autre accessoire, comme par exemple un capteur de pluie, audit élément vitré, ladite embase 5' présentant un trou 50' pour le passage d'une partie de cet accessoire et une face extérieure 51' qui est destinée à être fixée à une face intérieure de l'élément vitré, en vis-à-vis de cette face intérieure de l'élément vitré.

Ces trois moyens (ou « composants ») sont indépendants les uns des autres : ils ne sont pas en contact direct l'un avec l'autre et il n'y a aucun élément de liaison mécanique entre eux.

Ces trois moyens sont fixés par leur face extérieure respective, 31', 41', 51' à la face intérieure de l'élément vitré d'une manière indépendante :
- la platine 3' est fixée à l'élément vitré par rapport à son référentiel R3' qui lui est propre ;
- la semelle 4' est fixée à l'élément vitré par rapport à son référentiel R4' qui lui est propre et qui est indépendant de celui de la platine ; et
- l'embase 5' est fixée à l'élément vitré par rapport à son référentiel R5' qui lui est propre et qui est indépendant de celui de la platine et de la semelle.

Ces trois moyens peuvent être fixés par trois matières adhésives indépendantes à la face intérieure de l'élément vitré ; ils peuvent aussi être fixés par la même matière adhésive. Cette matière, ou ces matières, peut être, ou peuvent être un ruban adhésif double face ou une colle.

Bien sûr, cette matière adhésive est disposée contre la face extérieure de la platine, de la semelle et de l'embase de telle sorte que les trous de chacun de ces trois moyens qui servent à attacher les accessoires soient vides de matière adhésive.

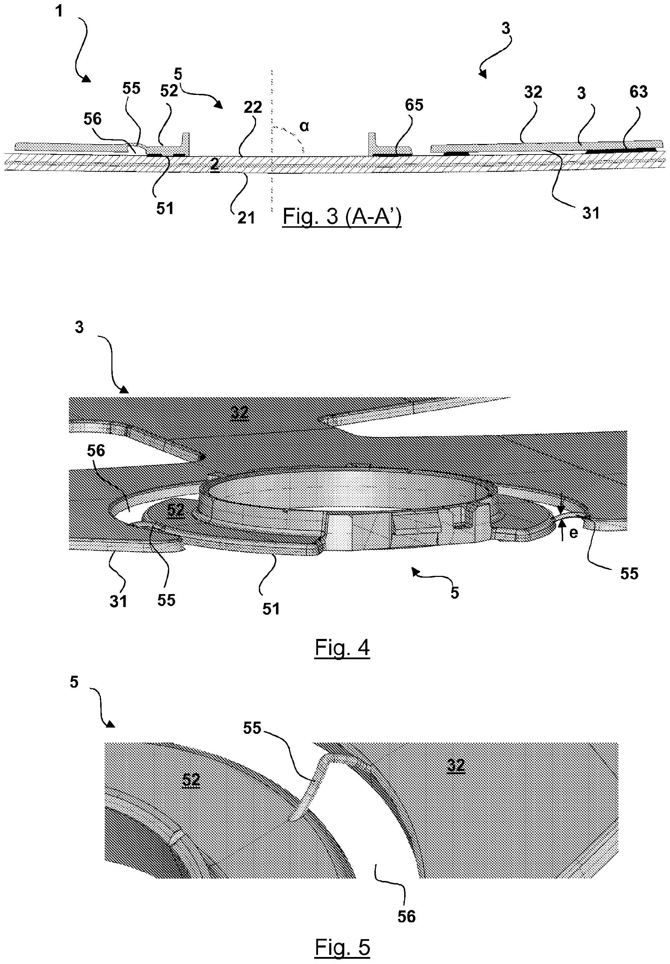

La présente invention concerne un vitrage 1, et notamment un vitrage de véhicule tel que celui visible, en coupe partielle, sur la figure 3.

Comme pour les vitrages de l'art antérieur, chaque vitrage 1 de véhicule selon l'invention comporte, comme visible en figure 3, un élément vitré 2 et au moins une platine 3 pour l'attachement réversible d'un accessoire (non illustré) audit élément vitré 2, ladite platine 3 présentant, comme dans l'art antérieur, une face extérieure 31 qui est fixée en vis-à-vis d'une face intérieure 22 dudit élément vitré 2.

Le vitrage 1 est destiné à fermer une baie réalisant une séparation entre un espace intérieur du véhicule et un espace extérieur au véhicule. L'élément vitré 2 présente ainsi une face extérieure 21 destinée à être tournée vers l'espace extérieur, une face intérieure 22, destinée à être tournée vers l'espace intérieur, ainsi qu'un chant périphérique.

Ainsi, lorsqu'il est fait référence aux notions de « intérieur » et « extérieur » dans le présent document, c'est toujours en référence à cette considération.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages/éléments vitrés feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie, tout autour du bord de la face intérieure 22, une bande d'ornementation (non illustrée). Cette bande d'ornementation résulte en général d'un dépôt d'émail, réalisé sur la face intérieure de l'élément vitré lorsqu'il est monolithique ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Lorsque l'élément vitré est un élément vitré composite, il a été fabriqué selon la technique bien connue de fabrication des vitrages multiples ou des vitrages feuilletés, bombés.

Sur la figure 3, l'élément vitré 2 est un vitrage feuilleté, bombé. C'est ici un pare-brise d'un véhicule automobile.

La platine 3 comporte d'une part une face extérieure 31 destinée à être tournée vers l'espace extérieur et qui est destinée à être fixée indirectement à une face intérieure de l'élément vitré en vis-à-vis de cette face intérieure de l'élément vitré et d'autre part une face intérieure 32, destinée à être tournée vers l'espace intérieur.

La platine 3 présentant un trou 30 pour le passage d'une partie d'un accessoire et pour l'attachement réversible de cet accessoire.

La platine 3 selon l'invention diffère de la platine de l'art antérieur illustrée en figure 1 en ce qu'elle comporte, comme visible en figure 2, au moins une embase 5 pour l'attachement réversible d'un autre accessoire à ladite platine 3, ladite embase 5 étant liée mécaniquement par au moins un bras de liaison 55 à ladite platine 3 et présentant une face extérieure 51 qui est fixée en vis-à-vis d'une face intérieure 22 dudit élément vitré 2, comme visible en figure 3.

L'embase 5 présente un trou 50 pour le passage d'une partie de l'accessoire, une face extérieure 51 qui est destinée à être fixée indirectement à une face intérieure de l'élément vitré en vis-à-vis de cette face intérieure de l'élément vitré ainsi qu'une face intérieure 52, destinée à être tournée vers l'espace intérieur.

Ainsi, la platine 3 et l'embase 5 ne sont pas deux moyens distincts pour l'attachement réversible chacun d'un accessoire mais sont deux moyens liés l'un à l'autre par au moins un bras de liaison, et de préférence plusieurs bras de liaison (en particulier deux, trois ou quatre bras) pour l'attachement réversible par chacun de ces moyens d'un accessoire tout en permettant de modifier/ajuster l'orientation de l'embase (et surtout de sa face extérieure 52) par rapport à la platine (et surtout sa face extérieure 32) par mouvement de l'embase qui est guidé et contrôlé par le, et de préférence les, bras de liaison 55.

Dans le cas de la figure 2, ces deux moyens sont fixés par leur face extérieure 31, 51 à la face intérieure 22 de l'élément vitré 2 d'une manière dépendante :
- la platine 3 est fixée à l'élément vitré par rapport à son référentiel R3 et
- l'embase 5 est fixée à l'élément vitré par rapport à son référentiel R5,
les deux référentiels étant liés à l'autre afin de former un référentiel unique R, grâce au(x) bras de liaison 55.

Ces deux moyens peuvent être fixés respectivement par deux matières adhésives 63, 65 indépendantes à la face intérieure 22 de l'élément vitré ; ils peuvent aussi être fixés par la même matière adhésive. Cette matière, ou ces matières, peut être, ou peuvent être un ruban adhésif double face ou une colle.

Bien sûr, cette matière adhésive est disposée contre la face extérieure de la platine et de l'embase de telle sorte que les trous de chacun de ces deux moyens qui servent à attacher les accessoires soient vides de matière adhésive.

En figure 2, l'embase 5 est attachée à la platine 3 par trois bras de liaison 55.

L'embase est séparée de la platine par une fente 56 et cette fente est traversée par les bras de liaison 55. Cette fente 56 pourrait être située tout autour de l'embase, mais comme l'embase est située le long d'un bord latéral de la platine, la fente ne fait pas tout le tour de l'embase.

Ces trois bras de liaison 55 sont disposés symétriquement les uns par rapport aux autres et par rapport à un plan P passant par un centre de ladite embase 5 et passant par un bras de liaison 55 supérieur. Ce plan P de symétrie est le plan de coupe A-A' illustré en figure 2.

Les deux autres bras de liaison qui ne sont dans le plan P sont disposés symétriquement par rapport au plan P et selon un angle d'environ 30 ° par rapport au centre de l'embase.

Comme visible plus particulièrement en figures 4 et 5, chaque bras de liaison 55 est venu de matière d'une part avec la platine 3 et d'autre part avec l'embase 5 ; chaque bras de liaison 55 présente de préférence une épaisseur e comprise entre 0,5 et 3,0 mm, comme par exemple de 2,0 mm.

Les bras de liaison sont plus fins que la platine et l'embase afin de leur conférer une certaine souplesse et sont coudés vers l'intérieur ; ils sont en forment d'arche et s'étendent ainsi au-dessus du plan moyen de la platine réalisé par la face intérieure 32 de la platine.

La matière de la platine 3, de l'embase 5 et des bras de liaison 55 peut être par exemple : du polyamide (et notamment du PA 66), de l'ABS ou du polyéthylène.

La totalité de la pièce ainsi formée par la platine 3, l'embase 5 et les trois bras de liaison 55 peut être fabriquée par exemple par moulage, en une seule opération, et avec une très grande précision.

Grâce aux bras de liaison 55, l'embase 5 peut être orientée dans son référentiel R5 et par rapport au reste de la platine 3, c'est-à-dire qu'elle peut être plus ou moins enfoncée en direction de l'élément vitré et avec un angle α d'orientation adéquate par rapport à la surface intérieure de l'élément vitré qui n'est pas nécessairement l'angle droit.

Chaque bras de liaison 55 est en outre coudé vers l'intérieur pour donner une plus grande plage d'enfoncement.

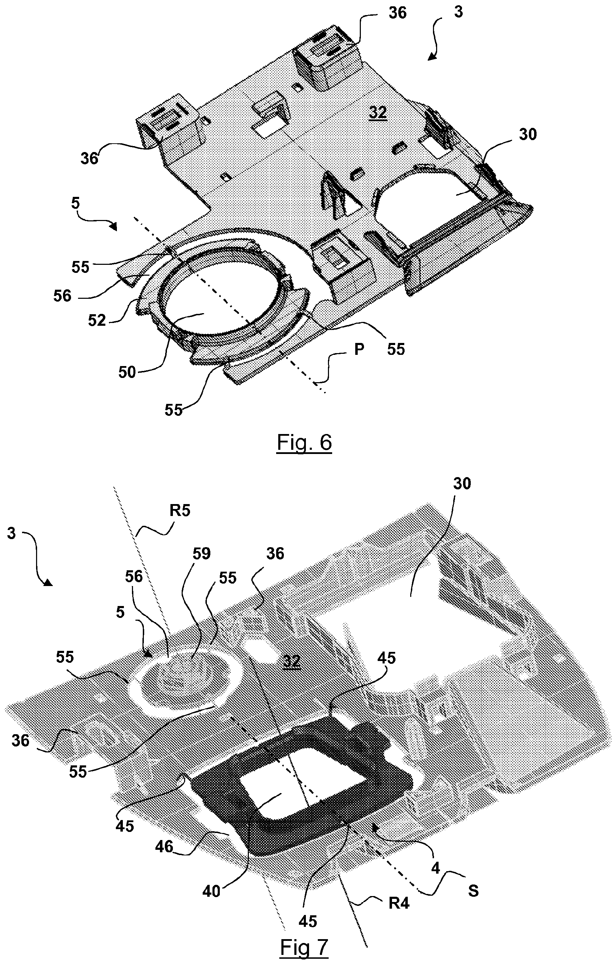

La figure 6 illustre une vue en perspective d'une platine 3 similaire à la platine 3 de la figure 2, sauf en ce qu'elle comporte des éléments 36 (trous de clippage) pour l'attachement réversible d'un cache intérieur.

L'embase 5 est séparée de la platine 3 par une fente 56 et cette fente est traversée par les bras de liaison 55. Cette fente 56 pourrait être située tout autour de l'embase, mais comme l'embase est située le long d'un bord latéral de la platine, la fente ne fait pas tout le tour de l'embase.

La platine 3 de la figure 6 permet ainsi d'attacher réversiblement :
- un accessoire à la platine par le trou 30
- un autre accessoire à l'embase 5 par le trou 50
- un cache intérieur par les éléments 36.

La figure 7 illustre une vue en perspective d'une platine 3 similaire à la précédente, sauf en ce que
- l'embase 5 est séparée de la platine 3 par une fente 56 qui est traversée par les bras de liaison 55 mais cette fente 56 est située tout autour de l'embase, car l'embase n'est pas située le long d'un bord latéral de la platine ;
- l'embase 5 comporte en outre un capteur de pluie 59, qui est un accessoire et qui est attaché réversiblement à l'embase 5 selon le référentiel R5 de cette embase ;
- il y a en outre une semelle 4 pour l'attachement réversible d'un autre accessoire, comme par exemple une caméra (non illustrée), audit élément vitré, semelle 4 présentant un trou 40 pour le passage d'une partie de cet accessoire et une face intérieure qui est fixée à la face intérieure de l'élément vitré en vis-à-vis de cette face intérieure de l'élément vitré par de la matière adhésive.

Cette semelle 4 est liée mécaniquement par au moins un bras de liaison 45 à la platine 3 et en l'occurrence ici par trois bras de liaison 45.

Cette semelle 4 est fixée à l'élément vitré par rapport à son référentiel R4 qui lui est propre et qui est dépendant de celui de la platine 3 grâce aux bras de liaison 45.

Ces trois bras de liaison 45 sont disposés symétriquement les uns par rapport aux autres et par rapport à un plan S passant par un centre de ladite semelle 4 et passant par un bras de liaison 45 inférieur.

Les deux autres bras de liaison qui ne sont dans le plan S sont disposés symétriquement par rapport au plan S et selon un angle d'environ 45 ° par rapport au centre de la semelle.

La semelle 4 est séparée de la platine 3 par une fente 46 qui est traversée par les bras de liaison 45 et cette fente 46 est située tout autour de la semelle 4, car la semelle n'est pas située le long d'un bord latéral de la platine.

La platine 3 de la figure 7 permet ainsi d'attacher réversiblement :
- un accessoire à la platine par le trou 30
- un autre accessoire à la semelle 4 par le trou 40
- un autre accessoire (le capteur de pluie 59) à l'embase 5 par le trou 50
- un cache intérieur par les éléments 36.

Les accessoires attachables réversiblement peuvent être choisis dans une liste comprenant : un capteur de pluie, un capteur de luminosité, un capteur photographique (appareil de captation d'image fixe dans le domaine du visible ; analogique ou numérique), un capteur infrarouge, une caméra (appareil de captation d'image animée dans le domaine du visible ; analogique ou numérique), un support de rétroviseur, un support d'écran de visualisation.

La pièce unique qui comporte au moins la platine 3 et l'embase 5, voire au moins la platine 3, la semelle 4 et l'embase 5 est fixée à la face intérieure 22 de l'élément vitré par un procédé automatique, semi-automatique ou manuel.

La platine 3 est d'abord fixée à la face intérieure 22 par sa face extérieure 31, puis l'embase 5 est fixée à la face intérieure 22 par sa face extérieure 51 en ajustant la position de l'embase 5 par rapport à la platine 3, cet ajustement étant bridé par les bras de liaison 55, puis la semelle 4 est fixée à la face intérieure 22 en ajustant la position de la semelle 4 par rapport à la platine 3, cet ajustement étant bridé par les bras de liaison 45. Dans l'absolu, s'il y a une semelle 4, elle peut être fixée avant l'embase 5.

## Revendications

1. Vitrage (1) de véhicule comportant un élément vitré (2), au moins une platine (3) pour l'attachement réversible d'un accessoire audit élément vitré (2), ladite platine (3) présentant une face extérieure (31) qui est fixée en vis-à-vis d'une face intérieure (22) dudit élément vitré (2), et comportant au moins une embase (5) pour l'attachement réversible d'un autre accessoire audit élément vitré (2) ladite embase (5) présentant une face extérieure (51) qui est fixée en vis-à-vis d'une face intérieure (22) dudit élément vitré (2), **caractérisé en ce que** ladite embase (5) est liée mécaniquement par au moins un bras de liaison (55) liant ladite embase (5) à ladite platine (3) en permettant de modifier l'orientation de ladite embase (5) vis-à-vis de la platine (3) lors de la fixation de ladite embase (5) à la face intérieure (22) de l'élément vitré (2).

2. Vitrage (1) selon la revendication 1, **caractérisé en ce que** ladite embase (5) est séparée de ladite platine (3) par une fente (56) et cette fente est traversée ou enjambée par ledit ou lesdits bras de liaison (55).

3. Vitrage (1) selon la revendication 1 ou 2, **caractérisé en ce qu'il** comporte au moins une semelle (4) pour l'attachement réversible d'un autre accessoire audit élément vitré (2), ladite semelle (4) étant liée mécaniquement par au moins un bras de liaison (45) liant ladite semelle (4) à ladite platine (3) en étant venu de matière d'une part avec ladite platine (3) et d'autre part avec ladite semelle (4) et ladite semelle (4) présentant une face extérieure qui est fixée en vis-à-vis d'une face intérieure (22) dudit élément vitré (2).

4. Vitrage (1) selon la revendication 3, **caractérisé en ce que** ladite semelle (4) est séparée de ladite platine (3) par une fente (46) qui est traversée par ledit ou lesdits bras de liaison (45).

5. Vitrage (1) selon l'une quelconque des revendications 1 à 4, **caractérisé en ce que** ladite semelle (4) et/ou ladite embase (5) est ou sont liée mécaniquement à ladite platine (3) par plusieurs bras de liaison (45, 55) disposés de préférence symétriquement les uns par rapport aux autres et par rapport à un axe passant par un centre respectivement de ladite semelle (4) et/ou de ladite embase (5) ou par rapport à un plan (S,P) passant par un centre respectivement de ladite semelle (4) ou de ladite embase (5).

6. Vitrage (1) selon l'une quelconque des revendications 1 à 5, **caractérisé en ce que** ladite platine (3), ladite semelle (4) et/ou ladite embase (5) sont fixées à ladite face intérieure (22) dudit élément vitré (2) par deux, voire trois matières adhésives (63, 65) identiques.

7. Vitrage (1) selon l'une quelconque des revendications 1 à 6, **caractérisé en ce que** ledit bras de liaison (45, 55) ou chaque bras de liaison (45, 55) est venu de matière d'une part avec ladite platine (3) et d'autre part respectivement avec ladite semelle (4) ou ladite embase (5), ledit bras de liaison (45, 55) ou chaque bras de liaison (45, 55) présentant de préférence une épaisseur (e) comprise entre 0,5 et 3,0 mm.

8. Vitrage (1) selon l'une quelconque des revendications 1 à 7, **caractérisée en ce que** ledit bras de liaison (45, 55) ou chaque bras de liaison (45, 55) est coudé.

9. Vitrage (1) selon l'une quelconque des revendications 1 à 8, **caractérisé en ce que** ladite platine (3) comporte des éléments (36) pour l'attachement réversible d'un cache intérieur.

10. Vitrage (1) selon l'une quelconque des revendications 1 à 9, **caractérisé en ce qu'il** comporte des accessoires choisis dans une liste comprenant : un capteur de pluie, un capteur de luminosité, un capteur photographique, un capteur infrarouge, une caméra, un support de rétroviseur, un support d'écran de visualisation, lesdits accessoires étant attachés grâce à ladite platine (3), à ladite embase (5), voire à ladite semelle (4).

11. Vitrage (1) selon l'une quelconque des revendications 1 à 10, **caractérisé en ce que** ledit élément vitré (2) est un élément vitré feuilleté bombé.

12. Pièce pour la fixation d'un accessoire au vitrage (1) selon l'une quelconque des revendications 1 à 11, ladite pièce comportant au moins une platine (3) et une embase (5) pour l'attachement réversible d'un autre accessoire, ladite embase (5) présentant une face extérieure (51) qui est destinée à être fixée en vis-à-vis d'une face intérieure (22) dudit élément vitré (2), **caractérisé en ce que** ladite embase (5) est liée mécaniquement par au moins un bras de liaison (55) liant ladite embase à ladite platine (3) en permettant de modifier l'orientation de ladite embase (5) vis-à-vis de la platine (3) lors de la fixation de ladite embase (5) à la face intérieure (22) de l'élément vitré (2).

13. Procédé pour la fixation de plusieurs accessoires au vitrage (1) selon l'une quelconque des revendications 1 à 11, ladite platine (3) étant fixée à ladite face intérieure (22) dudit élément vitré (2) puis l'embase (5) étant fixée à ladite face intérieure (22) dudit élément vitré (2) en ajustant la position de ladite embase (5) par rapport à ladite platine, cet ajustement étant bridé par au moins un bras de liaison (55).

## Patentansprüche

1. Fahrzeugscheibe (1), umfassend ein Glaselement (2), mindestens eine Platte (3) zum reversiblen Anbringen eines Geräts an das Glaselement (2), wobei die Platte (3) eine Außenseite (31) aufweist, die gegenüber einer Innenseite (22) des Glaselements (2) befestigt ist, und umfassend mindestens einen Sockel (5) zum reversiblen Anbringen eines anderen Geräts an das Glaselement (2), wobei der Sockel (5) eine Außenseite (51) aufweist, die gegenüber der Innenseite (22) des Glaselements (2) befestigt ist, **dadurch gekennzeichnet, dass** der Sockel (5) mechanisch durch mindestens einen Verbindungsarm (55), welcher den Sockel (5) verbindet, mit der Platte (3) verbunden ist, wodurch die Ausrichtung des Sockels (5) gegenüber der Platte (3) durch die Befestigung des Sockels (5) an die Innenseite (22) des Glaselements (2) modifiziert werden kann.

2. Scheibe (1) nach Anspruch 1, **dadurch gekennzeichnet, dass** der Sockel (5) von der Platte (3) durch einen Spalt (56) getrennt ist und dieser Spalt durch den oder die Verbindungsarm(e) (55) überquert oder überbrückt wird.

3. Scheibe (1) nach Anspruch 1 oder 2, **dadurch gekennzeichnet, dass** sie mindestens eine Sohle (4) zum reversiblen Anbringen eines anderen Geräts an das Glaselement (2) umfasst, wobei die Sohle (4) mechanisch durch mindestens einen Verbindungsarm (45), welcher die Sohle (4) verbindet, mit der Platte (3) verbunden ist, indem er einstückig einerseits mit der Platte (3) und andererseits mit der Sohle (4) ausgebildet ist und wobei die Sohle (4) eine Außenseite aufweist, die gegenüber einer Innenseite (22) des Glaselements (2) befestigt ist.

4. Scheibe (1) nach Anspruch 3, **dadurch gekennzeichnet, dass** die Sohle (4) von der Platte (3) durch einen Spalt (46) getrennt ist, der durch den oder die Verbindungsarm(e) (45) überquert wird.

5. Scheibe (1) nach einem der Ansprüche 1 bis 4, **dadurch gekennzeichnet, dass** die Sohle (4) und/oder der Sockel (5) mechanisch mit der Platte (3) durch mehrere Verbindungsarme (45, 55) verbunden ist/sind, die vorzugsweise symmetrisch in Bezug zueinander und in Bezug auf eine Achse, die durch eine jeweilige Mitte der Sohle (4) und/oder des Sockels (5) verläuft, oder in Bezug auf eine Ebene (S, P), die durch eine jeweilige Mitte der Sohle (4) oder des Sockels (5) verläuft, angeordnet sind.

6. Scheibe (1) nach einem der Ansprüche 1 bis 5, **dadurch gekennzeichnet, dass** die Platte (3), die Sohle (4) und/oder der Sockel (5) an die Innenseite (22) des Glaselements (2) durch zwei oder sogar drei identische Klebstoffe (63, 65) befestigt sind.

7. Scheibe (1) nach einem der Ansprüche 1 bis 6, **dadurch gekennzeichnet, dass** der Verbindungsarm (45, 55) oder jeder Verbindungsarm (45, 55) einstückig einerseits mit der Platte (3) und andererseits jeweils mit der Sohle (4) oder dem Sockel (5) ausgebildet ist, wobei der Verbindungsarm (45, 55) oder jeder Verbindungsarm (45, 55) vorzugsweise eine Dicke (e) zwischen 0,5 und 3,0 mm aufweist.

8. Scheibe (1) nach einem der Ansprüche 1 bis 7, **dadurch gekennzeichnet, dass** der Verbindungsarm (45, 55) oder jeder Verbindungsarm (45, 55) gebogen ist.

9. Scheibe (1) nach einem der Ansprüche 1 bis 8, **dadurch gekennzeichnet, dass** die Platte (3) Elemente (36) zum reversiblen Anbringen einer Innenabdeckung umfasst.

10. Scheibe (1) nach einem der Ansprüche 1 bis 9, **dadurch gekennzeichnet, dass** sie Geräte umfasst, ausgewählt aus einer Liste, umfassend: einen Regensensor, einen Helligkeitssensor, einen Fotosensor, einen Infrarotsensor, eine Kamera, eine Spiegelhalterung, eine Bildschirmhalterung, wobei die Geräte durch die Platte (3), den Sockel (5) oder die Sohle (4) angebracht sind.

11. Scheibe (1) nach einem der Ansprüche 1 bis 10, **dadurch gekennzeichnet, dass** das Glaselement (2) ein gekrümmtes Verbundglaselement ist.

12. Bauteil zur Befestigung eines Geräts an eine Scheibe (1) nach einem der Ansprüche 1 bis 11, wobei das Bauteil mindestens eine Platte (3) und einen Sockel (5) zum reversiblen Anbringen eines anderen Geräts umfasst, wobei der Sockel (5) eine Außenseite (51) aufweist, die so ausgelegt ist, dass sie gegenüber einer Innenseite (22) des Glaselements (2) befestigt ist, **dadurch gekennzeichnet, dass** der Sockel (5) mechanisch durch mindestens einen Verbindungsarm (55), welcher den Sockel mit der Platte (3) verbindet, verbunden ist, wodurch die Ausrichtung des Sockels (5) gegenüber der Platte (3) durch die Befestigung des Sockels (5) an die Innenseite (22) des Glaselements (2) modifiziert werden kann.

13. Verfahren zur Befestigung mehrerer Geräte an die Scheibe (1) nach einem der Ansprüche 1 bis 11, wobei die Platte (3) an die Innenseite (22) des Glaselements (2) befestigt wird, dann der Sockel (5) an die Innenseite (22) des Glaselements (2) durch Anpassen der Position des Sockels (5) in Bezug auf die Platte befestigt wird, wobei diese Anpassung durch einen Verbindungsarm (55) angeflanscht ist.

## Claims

1. Vehicle glazing (1) comprising a glazed element (2), at least one mounting plate (3) for the reversible attachment of an accessory to said glazed element (2), said mounting plate (3) having an exterior face (31) which is fixed facing an interior face (22) of said glazed element (2), and comprising at least one mount (5) for the reversible attachment of another accessory to said glazed element (2), said mount (5) having an exterior face (51) which is fixed facing an interior face (22) of said glazed element (2), **characterized in that** said mount (5) is mechanically connected by at least one connecting arm (55) connecting said mount (5) to said mounting plate (3) while at the same time allowing the orientation of said mount (5) to be modified with respect to the mounting plate (3) when attaching said mount (5) to the interior face (22) of the glazed element (2).

2. The glazing (1) as claimed in claim 1, **characterized in that** said mount (5) is separated from said mounting plate (3) by a slot (56) and this slot has said connecting arm or arms (55) passing across or straddling it.

3. The glazing (1) as claimed in claim 1 or 2, **characterized in that** it comprises at least one baseplate (4) for the reversible attachment of another accessory to said glazed element (2), said baseplate (4) being mechanically connected by at least one connecting arm (45) connecting said baseplate (4) to said mounting plate (3) while being formed as an integral part with, on the one hand, said mounting plate (3) and, on the other hand, said baseplate (4) and said baseplate (4) having an exterior face which is fixed facing an interior face (22) of said glazed element (2).

4. The glazing (1) as claimed in claim 3, **characterized in that** said baseplate (4) is separated from said mounting plate (3) by a slot (46) across which said connecting arm or arms (45) passes or pass.

5. The glazing (1) as claimed in any one of claims 1 to 4, **characterized in that** said baseplate (4) and/or said mount (5) is or are mechanically connected to said mounting plate (3) by several connecting arms (45, 55) arranged preferably symmetrically with respect to one another and with respect to an axis passing through a center of said baseplate (4) and/or of said mount (5) respectively, or with respect to a plane (S,P) passing through a center of said baseplate (4) or of said mount (5) respectively.

6. The glazing (1) as claimed in any one of claims 1 to 5, **characterized in that** said mounting plate (3), said baseplate (4) and/or said mount (5) are fixed to said interior face (22) of said glazed element (2) by two or even three identical adhesive substances (63, 65).

7. The glazing (1) as claimed in any one of claims 1 to 6, **characterized in that** said connecting arm (45, 55) or each connecting arm (45, 55) is formed as an integral part with, on the one hand, said mounting plate (3) and, on the other hand, said baseplate (4) or said mount (5) respectively, said connecting arm (45, 55) or each connecting arm (45, 55) preferably having a thickness (e) comprised between 0.5 and 3.0 mm.

8. The glazing (1) as claimed in any one of claims 1 to 7, **characterized in that** said connecting arm (45, 55) or each connecting arm (45, 55) is curved.

9. The glazing (1) as claimed in any one of claims 1 to 8, **characterized in that** said mounting plate (3) comprises elements (36) for the reversible attachment of an interior cover.

10. The glazing (1) as claimed in any one of claims 1 to 9, **characterized in that** it comprises accessories selected from a list comprising: a rain sensor, a light sensor, a photographic sensor, an infrared sensor, a camera, a rear-view mirror support, a display screen support, said accessories being attached thanks to said plate (3), to the mount (5), or even to said baseplate (4).

11. The glazing (1) as claimed in any one of claims 1 to 10, **characterized in that** said glazed element (2) is a curved laminated glazed element.

12. A component for fixing an accessory to the glazing (1) as claimed in any one of claims 1 to 11, said component comprising at least a mounting plate (3) and a mount (5) for reversible attachment of another accessory, said mount (5) having an exterior face (51) which is fixed facing an interior face (22) of said glazed element (2), **characterized in that** said mount (5) is mechanically connected by at least one connecting arm (55) connecting said mount to said mounting plate (3) while at the same time allowing the orientation of said mount (5) to be modified with respect to the mounting plate (3) when attaching said mount (5) to the interior face (22) of the glazed element (2).

13. A method for fixing several accessories to the glazing (1) as claimed in any one of claims 1 to 11, said mounting plate (3) being fixed to said interior face (22) and said glazed element (2) then the mount (5) being fixed to said interior face (22) of said glazed element (2) while adjusting the position of said mount (5) with respect to said mounting plate, this adjustment being constrained by at least one connecting arm (55).
